# NEUE EUROPÄISCHE PATENTSCHRIFT

(11) **EP 1 517 807 B2**
(45) Veröffentlichungstag und Bekanntmachung des Hinweises auf die Entscheidung über den Einspruch: **04.08.2010**
(45) Hinweis auf die Patenterteilung: 23.08.2006
(21) Anmeldenummer: 03760679.5
(22) Anmeldetag: 23.06.2003
(51) Int. Cl.: B60H 1/00

(54) **MODULARE HEIZUNGS- UND/ODER KLIMAANLAGE FÜR EIN KRAFTFAHRZEUG**
MODULAR HEATING AND/OR AIR CONDITIONING SYSTEM FOR A MOTOR VEHICLE
INSTALLATION DE CHAUFFAGE ET/OU DE CLIMATISATION MODULAIRE POUR VEHICULES

(30) Priorität: 21.06.2002 DE 10227926
(43) Veröffentlichungstag der Anmeldung: 30.03.2005
(73) Patentinhaber: Behr GmbH & Co. KG, 70469 Stuttgart (DE)
(72) Erfinder: LITWING, Erich, 73565 Spraitbach (DE); SCHWEIZER, Gebhard, 71229 Leonberg (DE); HEILEMANN, Jürgen, 73240 Wendlingen (DE); DIEKSANDER, Wolfgang, 70794 Filderstadt (DE)
(74) Vertreter: Grauel, Andreas
(86) Internationale Anmeldenummer: PCT/EP2003/006575
(87) Internationale Veröffentlichungsnummer: WO 2004/000589

(56) Entgegenhaltungen:
- EP-A1- 0 392 296
- EP-A1- 1 266 777
- EP-A2- 0 917 973
- WO-A1-01//34417
- DE-A1- 4 442 000
- DE-A1- 19 749 067
- DE-A1- 19 822 173
- DE-C1- 19 703 519
- FR-A1- 2 742 383
- US-A- 5 803 160
- US-B1- 6 305 733

## Beschreibung

Die Erfindung betrifft ein Verfahren zur Montage einer Heizungs- und/oder Klimaanlage für ein Kraftfahrzeug, gemäß dem Oberbegriff des Anspruchs 1.

Die EP 0 799 734 A2 offenbart eine Heizungs- und/oder Klimaanlage mit einem Gehäuse für ein Kraftfahrzeug, wobei das Gehäuse aus mehreren Gehäusesegmenten in Modulbauweise zusammensetzbar ist, und wobei das Gehäuse vor der Montage in das Kraftfahrzeug zusammengesetzt wird. Problematisch gestaltet sich die Montage in das Kraftfahrzeug, wenn Querträger bzw. andere den Einbauraum beschränkende Baugruppen vorhanden sind.

US 6 305 733 B offenbart eine Heizungsund/oder Klimaanlage bekannter Art. Ferner ist aus der WO 01/34417 A1 die Montage einer Klimaanlage mit einem zumindest zweiteiligen Gehäuse bekannt.

Es ist Aufgabe der Erfindung, ein Verfahren zur Montage einer Heizungs- und/oder Klimaanlage für ein Kraftfahrzeug so weiterzubilden, dass das Gehäuse einfach in das Kraftfahrzeug eingebaut werden kann und die Funktionalität der Heizungs- und/oder Klimaanlage einfach erweitert werden kann.

Diese Aufgabe wird durch ein Verfahren zur Montage einer Heizungs- und/oder Klimaanlage mit den Merkmalen des Anspruchs 1 gelöst. Die Unteransprüche betreffen vorteilhafte Aus- und Weiterbildungen der Erfindung.

Der Hauptgedanke der Erfindung besteht darin mindestens ein Gehäusesegment des Gehäuses für eine Heizungs- und/oder Klimaanlage als Einschubteil auszuführen, wobei das Einschubteil erst nach der Montage des Restgehäuses im Kraftfahrzeug in das Restgehäuse eingeschoben wird, wobei das Einschubteil mindestens eine zusätzliche Funktionsbaugruppe umfaßt. Durch die Ausführung mindestens eines Gehäusesegments als Einschubteil ist es möglich, das Gehäuse der Heizungs- und/oder Klimaanlage trotz vorhandener Hindernisse im Einbauraum einfach im Kraftfahrzeug zu montieren. Dies geschieht dadurch, dass zuerst die nicht als Einschubteil ausgeführten anderen Gehäusesegmente zu einem Restgehäuse zusammengebaut werden, und das Restgehäuse dann um ein im Einbauraum vorhandenes Hindernis positioniert und im Kraftfahrzeug montiert wird. Bei dem Hindernis kann es sich beispielsweise um einen durch den Einbauraum verlaufenden Querträger handeln. Das Einschubteil wird nach der Montage des Restgehäuses im Kraftfahrzeug in das Restgehäuse eingeschoben und befestigt, wodurch der Zusammenbau des Gehäuses der Heizungs- und/oder Klimaanlage im Kraftfahrzeug abgeschlossen wird. Zusätzlich sind in das Einschubteil weitere Funktionsbaugruppen integriert, so dass die Funktionalität der Klimaanlage einfach erweitert werden kann. Im einfachsten Fall umfaßt die Funktionsbaugruppe mindestens ein Mittel zur Luftführung, beispielsweise ein Luftleitelement oder einen Lufteinlass bzw. einen Luftauslass, eine Warmluftzuführung und eine Kaltluftzuführung.

Bei einer Ausführungsform umfaßt die Funktionsbaugruppe mindestens eine Mischklappe, wobei auch der Antrieb für die mindestens eine Mischklappe als Teil der Funktionsbaugruppe ausgeführt sein kann.

Bei einer besonders vorteilhaften Weiterbildung der Erfindung ist die Funktionsbaugruppe als Mischmodul ausgeführt, wobei durch das Mischmodul die temperierte Luft beispielsweise für einen Fondbereich im Kraftfahrzeug gemischt wird.

Durch die genannten Maßnahmen ist es durch das Einschubteil möglich, neben einer Erleichterung bei der Montage der Heizungs- und/oder Klimaanlage in das Kraftfahrzeug, die Funktionalität der Heizungs- und/oder Klimaanlage einfach durch den Austausch des Einschubteils zu erweitern. So ist das Restgehäuse für die verschiedenen Funktionalitäten, beispielsweise für die Ausführung als Einzonenklimaanlage oder Mehrzonenklimaanlage (Zweizonen- bzw. Dreizonen- bzw. Vierzonenklimaanlage) im wesentlichen gleich aufgebaut, es wird nur das entsprechende Einschubteil zur Realisierung der gewünschten Funktionalität in das Restgehäuse eingeschoben. Zudem ist es vorstellbar, dass für eine leichtere Montage des Gehäuses der Heizungs- und/oder Klimaanlage im Kraftfahrzeug mehrere Gehäusesegmente als Einschubteile ausgeführt werden.

Im folgenden wird die Erfindung anhand eines Ausführungsbeispiels unter Bezugnahme auf die Zeichnung im einzelnen erläutert. In der Zeichnung zeigen:
- Fig. 1: Gehäuse für eine Heizungs- und/oder Klimaanlage;
- Fig. 2: Seitenansicht der einzelnen Gehäusesegmente;
- Fig. 3: Seitenansicht des Gehäuses für eine Heizungs- und/oder Klimaanlage;
- Fig. 4: Einschubteil;
- Fig. 5a: Frontansicht des Einschubteils;
- Fig. 5b: Schnittdarstellung des Einschubteils entlang der Schnittlinie A-A;

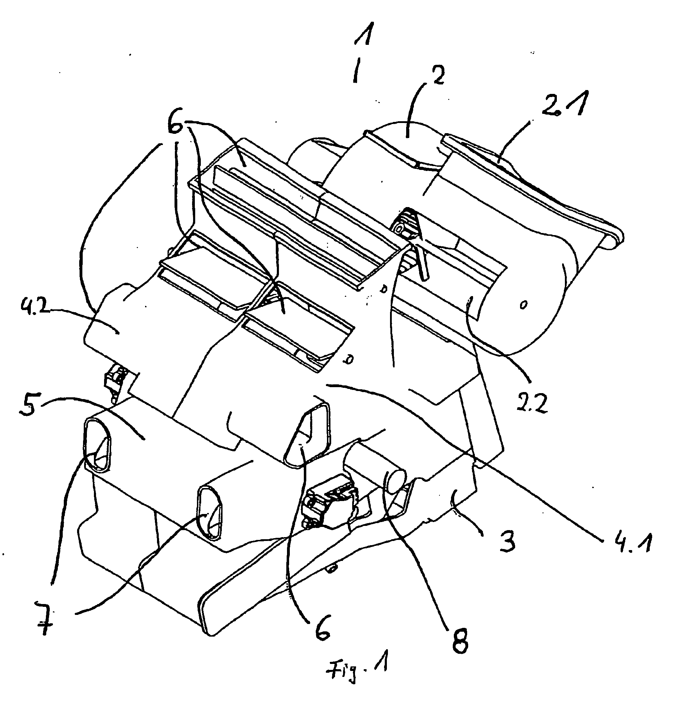

Fig. 1 zeigt in schematischer Darstellung ein Gehäuse 1 für eine Heizungs- und/oder Klimaanlage. Das dargestellte Gehäuse 1 umfaßt ein Gebläsesegment mit einem Frischlufteinlass 2.1 und einem Umlufteinlass 2.2, ein Bodensegment 3, ein rechtes und ein linkes Luftverteilungs- und Wärmeübertragersegment 4.1, 4.2 und ein Einschubteil 5, wobei die Luftverteilungs- und Wärmübertragersegmente 4.1, 4.2 über entsprechende Luftaustrittsöffnungen 6 verfügen, und wobei das Einschubteil 5 ebenfalls über zwei Luftaustrittsöffnungen 7 verfügt. Wie die Fig. 1 weiter zeigt, ist das Gehäuse im dargestellten Ausführungsbeispiel um einen Querträger 8 angeordnet

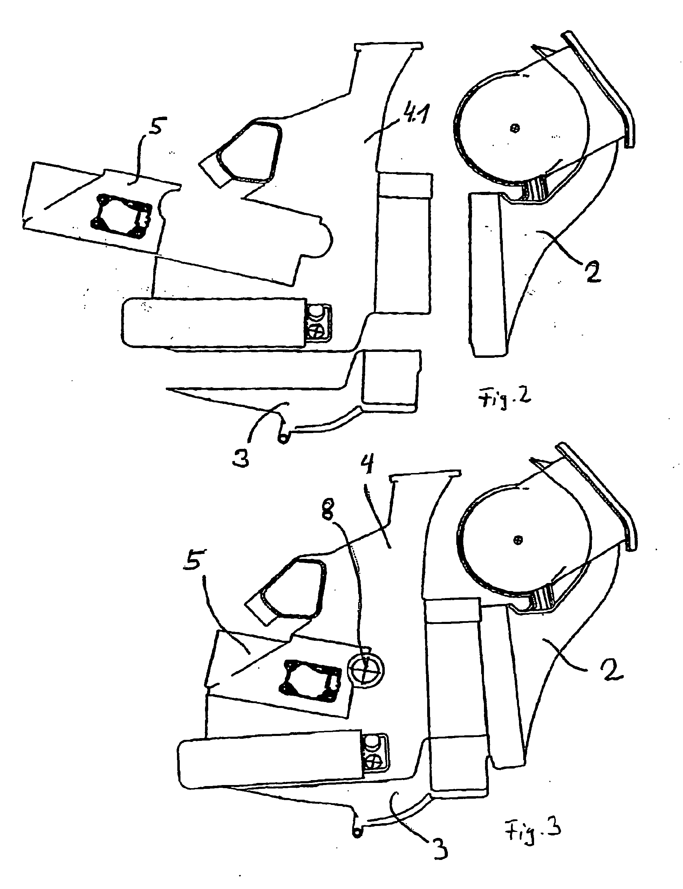

Fig. 2 zeigt eine Seitenansicht des rechten Luftverteilungs- und Wärmübertragersegments 4.1, des Gebläsesegments 2, des Bodensegments 3 und des Einschubteils 5 vor dem Zusammenbau des Gehäuses für eine Heizungs- und/oder Klimaanlage.

Fig. 3 zeigt eine Seitenansicht des um einen Querträger 8 angeordneten Gehäuses 1 einer Heizungs- und/oder Klimaanlage für ein Kraftfahrzeug mit dem bereits eingeschobenen Einschubteil 5.

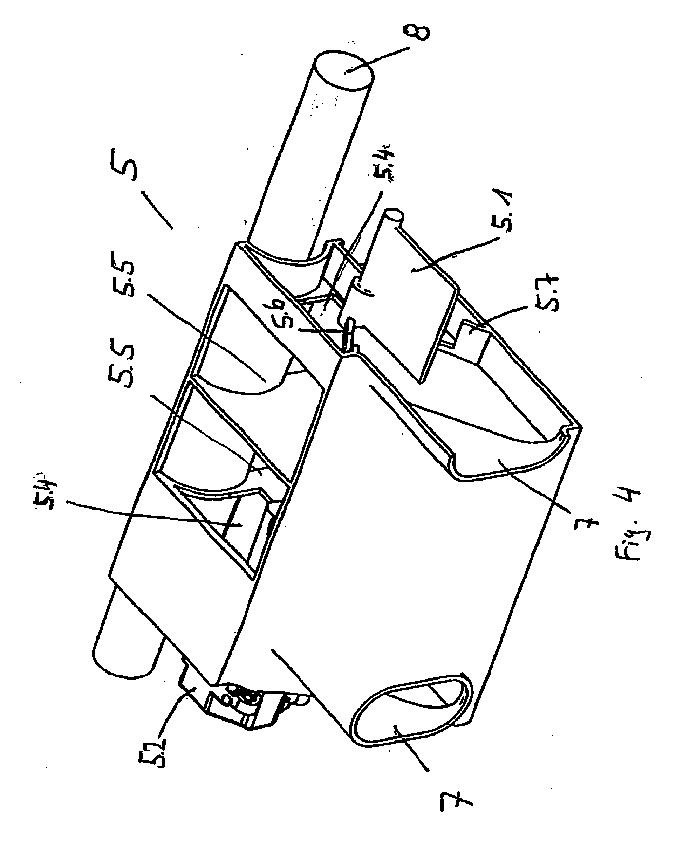

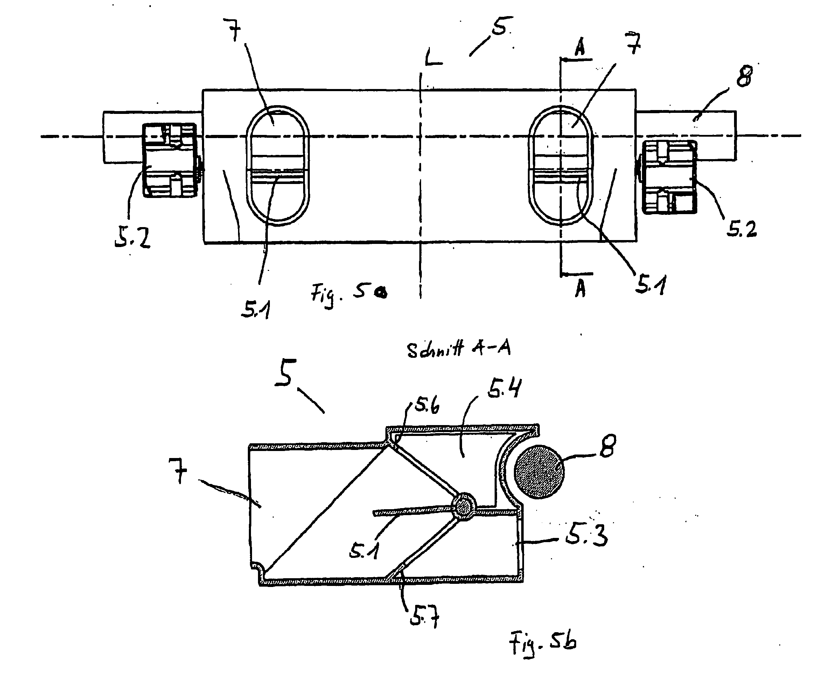

Fig. 4 zeigt in schematischer Darstellung das auf der rechten Seite aufgebrochene Einschubteil 5 und seine Lage zu einem im Einbauraum vorhandenen Querträger 8. Fig. 5a und 5b zeigen eine Frontansicht bzw. ein Schnittbild des Einschubteils 5. Das für die Montage des Gehäuses 1 auf bzw. um den Querträger 8 notwendige Einschubteil 5 ist im dargestellten Ausführungsbeispiel als Mischmodul ausgeführt. Dieses Mischmodul wird beispielsweise für die Belüftung der hinteren Fahrzeugzone (Fondbereich), der B-Säule, der Mitteldüse auf der Mittelkonsole oder auch für den Fußraum benützt. Wie aus der Fig. 5a zu entnehmen ist, ist das Einschubteil 5 symmetrisch zu einer Längsachse L aufgebaut und umfaßt zwei Mischklappen 5.1 zur Temperierung der Luft. Die Klappen 5.1 können durch eine durchgehende Welle mit einem Motor oder wie im dargestellten Ausführungsbeispiel zur getrennten Rechts-Links-Temperatureinstellung jeweils durch einen Motor 5.2 betätigt werden. Vor den Mischklappen 5.1 gibt es jeweils eine Kaltluftzuführung 5.3 sowie eine Warmluftzuführung 5.4. Die Mischklappen 5.1 sind in einer Mittelstellung dargestellt, wobei die Bewegung der Mischklappe 5.1 durch einen oberen Endanschlag 5.6 (Mischstellung kalt) und durch einen unteren Endanschlag 5.7 (Mischstellung warm) begrenzt wird. Durch das Mischmodul 5 wird die gesamte Warmluft von einem nicht dargestellten Heizkörper sowie von einem wahlweise vorhandenen PTC-Heizer (ebenfalls nicht dargestellt) durch zwei Luftkanäle 5.5 von unten nach oben geführt. Abhängig von der Ausführung des Einschubteils 5 sind nun die verschiedenen oben angegebenen Luftführungen zur Belüftung der verschiedenen Fahrzeugzonen ausführbar. So kann beispielsweise eine zweizonige Heizungs- und/oder Klimaanlage durch das dargestellte Einschubteil 5 sehr einfach in eine .zumindest dreizonige Heizungs- und/oder Klimaanlage mit einer temperierbaren Fondbelüftung bzw. in eine vierzonige Heizungs- und/oder Klimaanlage umgebaut werden, wobei bei der vierzonigen Heizungs- und/oder Klimaanlage der rechte bzw. linke Fondbereich getrennt und unterschiedlich temperiert belüftet werden kann, und wobei weiterhin das gleiche Restgehäuse verwendbar ist.

## Patentansprüche

1. Verfarhren zur Montage einer Heizungs- und/oder Klimaanlage mit einem aus mehreren Gehäusesegmenten (2, 3, 4, 5) aufgebauten Gehäuse (1) für ein Kraftfahrzeug, wobei mindestens ein Gehäusesegment als Einschubteil (5) ausgeführt ist, das mindestens eine Funktionsbaugruppe umfasst, mit mindestens einem Mittel zur Luftführung (7, 5.5), einer Warmluftzuführung (5.3), einer Kaltluftzuführung (5.4) und/oder mindestens einer Mischklappe (5.1), und das Einschubteil (5) in einen im Restgehäuse der Heizungs- und/oder Klimaanlage ausgebildeten Aufnahmeraum einschiebbar ist, wobei das Gehäuse (1) ein Gebläsesegment mit einem Frischlufteinlass (2.1) und einem Umlufteinlass (2.2), ein Bodensegment (3) und ein rechtes und ein linkes Luftverteilungs- und Wärmeübertragersegment (4.1, 4.2) umfasst, **dadurch gekennzeichnet, dass** die nicht als Einschubteil (5) ausgeführten Gehäusesegmente (2, 3, 4) zu einem Restgehäuse zusammengebaut werden und das Restgehäuse um einen im Einbauraum des Fahrzeugs vorhandenen Querträger (8) positioniert und im Kraftfahrzeug montiert wird, wobei das Einschubteil (5) nach der Montage des Restgehäuses im Kraftfahrzeug in einen im Restgehäuse der Heizungs- und/oder Klimaanlage ausgebildeten Aufnahmeraum das Restgehäuse eingeschoben und befestigt wird wodurch der Zusammenbau des Gehäuses der Heizungs- und/oder Klimaanlage im Kraftfahrzeug abgeschlossen wird.

2. Verfahren nach Anspruch 1, **dadurch gekennzeichnet, dass** die Funktionsbaugruppe ein Mischmodul für einen Fondbereich ist.

3. Verfahren nach Anspruch 1, **dadurch gekennzeichnet, dass** die Funktionsbaugruppe mindestens einen Antrieb (5.2) für die mindestens eine Mischklappe (5.1) umfaßt.

4. Verfahren nach einem der vorherigen Ansprüche, **dadurch gekennzeichnet, dass** das Einschubteil (5) symmetrisch zu einer Längsachse (L) ausgeführt ist.

## Claims

1. A method for installing a heating and/or air conditioning system comprising a housing (1) composed of a plurality of housing segments (2, 3, 4, 5) for a motor vehicle, wherein at least one housing segment is designed as a slide-in part (5) that includes at least one functional assembly, and comprising at least one means for air guidance (7, 5.5), a warm-air supply (5.3), a cold-air supply (5.4), and/or at least one blending door (5.1), and the slide-in part (5) can be slid into a receiving space formed in the remaining housing of the heating and/or air conditioning system, wherein the housing (1) includes a blower segment having a fresh air inlet (2.1) and an air-recirculation inlet (2.2), a base segment (3), a right-hand air distribution and heat transfer segment (4.1), and a left-hand air distribution and heat transfer segment (4.2), **characterized in that** the housing segments (2, 3, 4) that are not designed as a slide-in part (5) are assembled to form a remaining housing, and the remaining housing is positioned around a crossmember (8) provided in the installation space in the vehicle, and is installed in the motor vehicle, wherein, after the remaining housing has been installed in the motor vehicle, the slide-in part (5) is slid into a receiving space formed in the remaining housing of the heating and/or air conditioning system and is fastened therein, thereby completing the assembly of the housing of the heating and/or air conditioning system in the motor vehicle.

2. The method according to claim 1 **characterized in that** the functional assembly is a mixing module for a rear region.

3. The method according to claim 1, **characterized in that** the functional assembly includes at least one drive (5.2) for the at least one blending door (5.1).

4. The method according to one of the preceding claims, **characterized in that** the lide-in part (5) is symmetrical about a longitudinal axis (L).

## Revendications

1. Procédé de montage d'un système de chauffage et / ou de climatisation pour un véhicule automobile, comprenant un carter (1) constitué de plusieurs segments de carter (2, 3, 4, 5), où au moins un segment de carter est réalisé comme une pièce emboîtable (5) qui comprend au moins un ensemble fonctionnel comportant au moins un moyen servant au guidage (7, 5.5) de l'air, une alimentation en air chaud (5.3), une alimentation en air froid (5.4) et / ou au moins un volet mélangeur (5.1), et la pièce emboîtable (5) peut être insérée dans un espace de logement configuré dans la partie restante du carter du système de chauffage et / ou de climatisation, où le carter (1) comprend un segment de carter comportant une entrée d'air frais (2.1) et une entrée d'air ambiant (2.2), un segment de plancher (3) et un segment droit et gauche de répartition d'air et d'échangeur de chaleur (4.1, 4.2),
**caractérisé en ce que** les segments de carter (2, 3, 4) non réalisés comme une pièce emboîtable (5) sont assemblés pour former la partie restante du carter, et la partie restante du carter est positionnée autour d'une traverse (8) présente dans l'espace de montage du véhicule et montée dans le véhicule automobile, où la pièce emboîtable (5), après le montage de la partie restante du carter, dans le véhicule automobile, est insérée et fixée dans un espace de logement configuré dans la partie restante du système de chauffage et / ou de climatisation, faisant que l'assemblage du carter du système de chauffage et / ou de climatisation, dans le véhicule automobile, est achevé.

2. Procédé selon la revendication 1, **caractérisé en ce que** l'ensemble fonctionnel est un module mixte pour un secteur arrière.

3. Procédé selon la revendication 1, **caractérisé en ce que** l'ensemble fonctionnel comprend au moins un entraînement (5.2) pour le volet mélangeur (5.1) au moins au nombre de un.

4. Procédé selon l'une quelconque des revendications précédentes, **caractérisé en ce que** la pièce emboîtable (5) est réalisée de façon symétrique par rapport à un axe longitudinal (L).
